# EUROPÄISCHE PATENTSCHRIFT

(11) **EP 2 113 641 B1**
(45) Veröffentlichungstag und Bekanntmachung des Hinweises auf die Patenterteilung: **16.11.2011**
(21) Anmeldenummer: 09156095.3
(22) Anmeldetag: 25.03.2009
(51) Int. Cl.: F01L 1/352, F16D 3/10, F16H 1/36, F16H 35/00

(54) **Vorrichtung zur Phasenverschiebung des Drehwinkels eines Antriebsrades zu einer Abtriebswelle**
Device for phase shifting the rotation angle of a drive wheel for a main shaft
Dispositif de décalage de phase de l'angle de rotation d'une roue motrice vers un arbre entraîné

(30) Priorität: 28.04.2008 DE 102008021220
(43) Veröffentlichungstag der Anmeldung: 04.11.2009
(73) Patentinhaber: Pierburg GmbH, 41460 Neuss (DE)
(72) Erfinder: Nowak, Martin, 51379 Leverkusen (DE); Dismon, Heinrich, 52538, Gangelt (DE); Grimm, Dr., Karsten, 52064, Aachen (DE)
(74) Vertreter: Patentanwälte ter Smitten

(56) Entgegenhaltungen:
- WO-A1-2004/035997
- WO-A1-2008/125569
- DE-A1- 1 425 793
- DE-A1- 2 842 154
- DE-U- 7 337 206
- US-A- 1 317 075
- US-A- 5 415 595
- US-A- 5 680 837

## Beschreibung

Die Erfindung betrifft eine Vorrichtung zur Phasenverschiebung des Drehwinkels eines Antriebsrades zu einer Abtriebswelle, insbesondere einer Nockenwelle einer Verbrennungskraftmaschine, mit genau einem Planetengetriebe, welches ein Sonnenrad und ein Hohlrad aufweist, welche mit zumindest einem Planetenrad kämmen sowie einem Planetenträger, auf dem dass zumindest eine Planetenrad drehbar angeordnet ist und der zumindest drehfest mit der Abtriebswelle verbunden ist, einem Antriebsrad, welches mit dem Planetengetriebe verbunden ist und einem Stellantrieb, der derart am Planetengetriebe angreift, dass das Hohlrad relativ zum Sonnenrad verdrehbar ist.

Derartige Vorrichtungen sind insbesondere zur Phasenverschiebung zwischen einer Kurbelwelle und einer Nockenwelle eines Verbrennungsmotors bekannt, können jedoch im Bereich der Verbrennungsmotoren beispielsweise auch zur zyklusgenauen Steuerung eines Abgasrückführsystems verwendet werden. Die Phasenverschiebung dient zur variablen Ventilzeitsteuerung zur Verbesserung des Verbrennungsprozesses im Motor. Zur Phasenverschiebung der Nockenwelle sind beispielsweise Flügelzellen-Nockenversteller, Nockenwellenkettenversteller oder axial verschiebbare Verzahnungselemente bekannt. Als besonders vorteilhaft hat sich die Verwendung von elektrischen Phasenverstellern herausgestellt, welche mit einem Planetengetriebe arbeiten. Diese bieten die Möglichkeit einer stufenlosen Verstellung, so dass eine hohe Variabilität erreicht wird.

So wird in der DE 10 2005 018 956 A1 eine Vorrichtung zur relativen Verstellung der Winkelstellung zwischen der Kurbelwelle und der Nockenwelle offenbart, bei der ein Planetengetriebe verwendet wird. Diese Vorrichtung weist ein durch die Kurbelwelle angetriebenes Antriebsrad mit einer Innenverzahnung auf, welches mit mehreren Planetenrädern kämmt. Diese sind auf einem Planetenträger angeordnet, der über einen Stellantrieb verdrehbar ist. Ein zweites innenverzahntes Hohlrad ist auf der Nockenwelle befestigt und kämmt ebenfalls mit den Planetenrädern. Bei einer derartigen Ausführung ist es notwendig, zwischen dem Stellantrieb und dem Planetenträger eine Kupplung zum Radialspielausgleich vorzusehen. Bei Verwendung eines derartigen Doppelplanetengetriebes mit unterschiedlicher Verzahnung in den beiden Hohlrädern ist eine kontinuierliche Untersetzung ohne permanente Korrektur durch den Stellantrieb ausgeschlossen, da andernfalls die Synchronisation von Kurbelwelle und Nockenwelle verloren geht. Ein ständiger Stromverbrauch des elektrischen Stellantriebes ist somit die Folge.

Des Weiteren ist aus der DE 73 37 206 U eine Vorrichtung zur Verstellung der Phasenlage eines Steuerorgans gegenüber seiner Antriebswelle bekannt, welche ein zweistufiges Planetengetriebe mit einem Stellantrieb, der tangential zum Planetengetriebe angeordnet ist und eine Schnecke aufweist, die an einer Außenverzahnung des Hohlrades angreift. Das Sonnenrad ist mit der Antriebswelle verbunden.

Die DE 28 42 154 A1 offenbart eine Vorrichtung zur Phasenverschiebung, bei der ein Sonnenrad synchron zur Antriebswelle angetrieben wird und mit Planetenrädern kämmt, die drehbar an einem Planetenträger befestigt sind. Die Planetenräder kämmen mit einem Hohlrad, welches fest mit der Abtriebswelle verbunden ist. Eine Verstellung erfolgt durch Drehung des Planetenträgers.

Zusätzlich ist aus der nachveröffentlichten WO 2008/125569 A1 eine verstellbare Nockenwelle bekannt, bei der ein Planetengetriebe aus zwei hintereinander angeordneten Sonnenrädern und mehreren als Doppelzahnräder ausgebildeten Planetenrädern besteht, deren erster Zahnkranz mit dem ersten Sonnenrad kämmt, das mit der Antriebswelle verbunden ist und deren zweiter Zahnkranz mit dem zweiten Sonnenrad kämmt, dass mit der Abtriebswelle verbunden ist. Die Verstellung erfolgt durch Verstellung des Planetenträgers.

Auch die US 5,680,836, welche den nächstliegenden Stand der Technik bildet, beschreibt eine Vorrichtung zur Phasenverschiebung zwischen einer Nockenwelle und einer Kurbelwelle mit einem Planetengetriebe. Hierbei ist ein Planetenträger auf einer Nockenwelle fest angeordnet, wobei die Planetenräder mit dem Sonnenrad und einer Innenverzahnung eines Antriebsrades in Eingriff stehen. Das Antriebsrad wird beispielsweise über einen Kettentrieb in einem festen Übersetzungsverhältnis über die Kurbelwelle angetrieben. Eine Drehwinkelverstellung erfolgt bei dieser Ausführung durch Verdrehen des Sonnenrades mittels eines Stellantriebs.

Nachteilig an einer derartigen Ausführung ist, dass zum Festhalten des Sonnenrades ein elektrischer Stellantrieb mit Spannung versorgt werden muss, da keine Selbsthemmung des Antriebs vorliegt. Zusätzlich besteht einen relativ großer Bauraumbedarf insbesondere in axialer Richtung, da das Sonnenrad lediglich an der axial zur Nockenwelle entfernten Seite des Planetengetriebes angetrieben werden kann.

Es ist daher Aufgabe der Erfindung, eine Vorrichtung zur Phasenverschiebung des Drehwinkels eines Antriebsrades zu einer Abtriebswelle zur Verfügung zu stellen, die einen möglichst geringen Bauraum aufweist und mittels derer bei Verwendung eines elektrischen Antriebs im Vergleich zu bekannten Ausführungen Energie eingespart werden kann.

Diese Aufgabe wird durch den kennzeichnenden Teil des Hauptanspruchs gelöst. Die Phasenverstellung wird somit durch das Verdrehen des Hohlrades erreicht. Somit wird es erst möglich, den Stellantrieb tangential zum Planetengetriebe anzuordnen. Durch die Kombination dieser tangentialen Anordnung mit dem Schneckengetriebe des Stellantriebes tritt eine Selbsthemmung des Antriebs auf, so dass in Betriebszuständen ohne Verstellung des Stellantriebs keine Energie zum Halten des Hohlrades aufgebracht werden muss.

Vorzugsweise ist das Antriebsrad über eine Antriebsradachse in einem Lagergehäuse gelagert und weist eine Schmierölbohrung auf, die mit einer Schmierölbohrung der Abtriebswelle fluidisch verbunden ist. Somit kann bei einer Verwendung als Phasenversteller für eine Nockenwelle die Schmierölbohrung der Nockenwelle im Innern der Antriebsradachse weitergeführt werden, wodurch ohne zusätzlichen Ölkreislauf auf einfache Weise die Lagereinheiten zwischen Antriebsrad und Lagergehäuse geschmiert, gekühlt und gereinigt werden können.

In einer weiterführenden Ausführungsform ist das Lagergehäuse mit einem Getriebegehäuse fest verbunden, wobei das Planetengetriebe und zumindest die Schnecke des Stellantriebs in dem Lagergehäuse und dem Getriebegehäuse angeordnet sind. Somit besteht ein gemeinsames Gehäuse der Lager des Antriebsrades als auch des Planetengetriebes, welches somit ebenfalls mit Öl über die Schmierölbohrungen versorgt wird, wodurch eine lange Lebensdauer sichergestellt wird.

Vorzugsweise sind das Planetengetriebe, die Schnecke des Stellantriebs und die Lagereinheit des Antriebsrades im Zylinderkopf der Verbrennungskraftmaschine integriert. Entsprechend ist die gesamte Vorrichtung im Ölkreislauf des Verbrennungsmotors und nach außen gekapselt angeordnet. Hierdurch kann Korrosion und Verschmutzung an den sich drehenden Bauteilen und Verzahnungen weitestgehend vermieden werden, so dass eine lange Lebensdauer sichergestellt wird.

In einer vorteilhaften Ausgestaltung der Erfindung ist zwischen dem Hohlrad und dem zumindest einen Planetenrad zur Drehübertragung ein Mondrad angeordnet, welches in die Innenverzahnung des Hohlrades greift. Durch den Einsatz eines derartigen Getriebes lassen sich Übersetzungsverhältnisse von 1:1 oder 2:1 darstellen, so dass bei geeigneter Nockenwellengeometrie vorhandene Nockenwellenantriebsräder gegebenenfalls nicht ersetzt werden müssen.

In einer weiteren Ausgestaltung ist zwischen Hohlrad und Planetenrad ein Magnet angeordnet, der mit einem berührungslosen Sensor kommuniziert, wodurch eine einfache Steuerung durch die vorhandene Lagerückmeldung möglich wird.

Es werden somit Vorrichtungen zur Phasenverschiebung des Drehwinkels eines Antriebsrades zu einer Abtriebswelle vorgeschlagen, die sehr klein gebaut werden können, so dass der geringe zur Verfügung stehende Bauraum in einem Verbrennungsmotor optimal genutzt werden kann. Der Energieverbrauch des Stellantriebes ist im Vergleich zu bekannten Ausführungen durch die tangentiale Anordnung zum Planetengetriebe und die Selbsthemmung des Getriebes sehr gering. Zusätzlich wird durch die verschiedenen Ausführungen eine hohe Lebensdauer der Vorrichtung sichergestellt.

Ein Ausführungsbeispiel ist in den Figuren dargestellt und wird nachfolgend am Beispiel einer Vorrichtung zur Phasenverschiebung zwischen einer Kurbelwelle und einer Nockenwelle beschrieben.

Die Figur 1 zeigt eine perspektivische Außenansicht einer erfindungsgemäßen Vorrichtung zur Phasenverschiebung einer Nockenwelle.

Die Figur 2 zeigt eine Seitenansicht der erfindungsgemäßen Vorrichtung aus Figur 1 in geschnittener Darstellung.

Die Figur 3 zeigt eine Kopfansicht der erfindungsgemäßen Vorrichtung der Figuren 1 und 2 in geschnittener Darstellung.

Die Figur 4 zeigt eine Kopfansicht eines Planetengetriebes mit Mondrädern einer weiteren Ausführung der erfindungsgemäßen Vorrichtung.

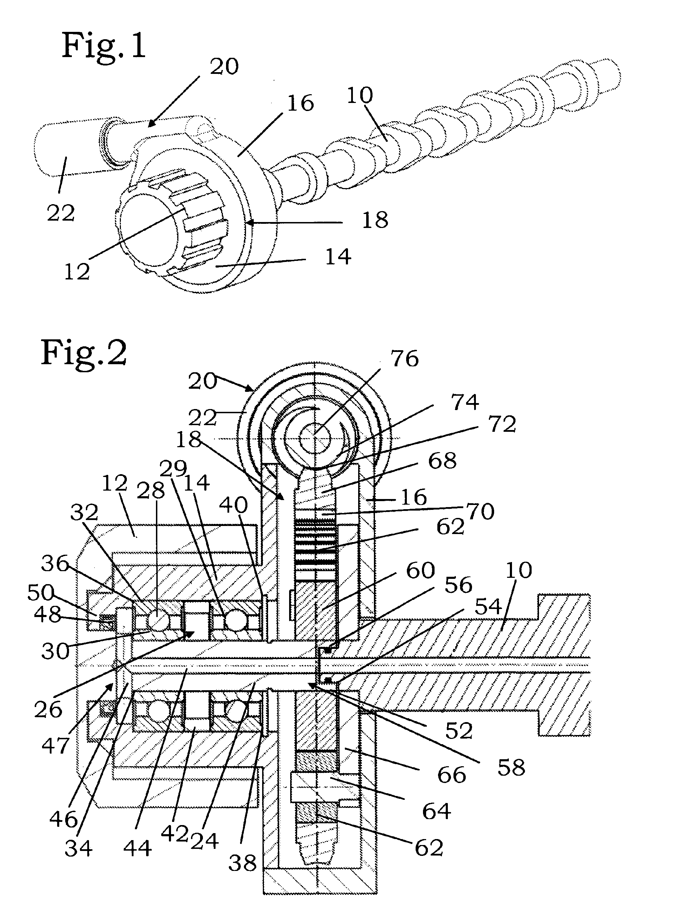

In Figur 1 ist eine Abtriebswelle 10 in Gestalt einer Nockenwelle dargestellt, welche über einen Antriebsrad 12 angetrieben wird. Dieses Antriebsrad 12 weist eine Außenverzahnung auf, in die ein Zahnriemen greift, der an seinem gegenüberliegenden Ende entsprechend auf einem Abtriebsrad einer Kurbelwelle läuft, so dass die Drehung der Kurbelwelle über den Zahnriemen auf das Antriebsrad 12 übertragen wird. Alternativ können selbstverständlich auch Kettentriebe verwendet werden.

Zwischen der Nockenwelle 10 und dem Antriebsrad 12 ist ein Außengehäuse 14, 16 einer Vorrichtung zur Phasenverschiebung des Drehwinkels zwischen dem Antriebsrad 12 und der Nockenwelle 10 angeordnet. Das Außengehäuse 14, 16 besteht dabei aus einem Lagergehäuse 14, über das das Antriebsrad 12 gelagert wird und einem Getriebegehäuse 16, welches ein Planetengetriebe 18 sowie Teile eines Stellantriebes 20 mit einem Elektromotor 22 umgibt, wie insbesondere in Figur 2 zu erkennen ist.

Aus Figur 2 wird der innere Aufbau dieser Vorrichtung zur Phasenverschiebung ersichtlich. Das Antriebsrad 12 weist eine Antriebsradachse 24 auf, über welche das Antriebsrad 12 im feststehenden Lagergehäuse 14 mittels einer Lagereinheit 26 gelagert ist.

Die Lagereinheit 26 besteht aus zwei Kugellagern 28, 29, deren Innenringe 30 auf die Antriebsradachse 24 gepresst und deren Außenringe 32 in das Lagergehäuse 14 eingepasst sind. Der Innenring 30 des ersten Kugellagers 28 stützt sich gegen einen Absatz 34 an der Antriebsradachse 24 ab, während der Außenring 32 des ersten Kugellagers 28 gegen einen Absatz 36 des Lagergehäuses 14 anliegt. Der Außenring 32 des zweiten Kugellagers 29 liegt gegen eine Seegerring 38 an, der in einer Nut 40 des Lagergehäuses 14 angeordnet ist. Zwischen den beiden Außenringen 32 der Lagereinheit 26 ist eine Buchse 42 angeordnet.

Zur Versorgung der Lagereinheit 26 mit Öl wird eine Schmierölbohrung 44 der Nockenwelle 10 in der Antriebsradachse 24 weitergeführt und über eine Radialbohrung 46 hinter die Lagereinheit 26 an ein erstes Ende 47 der Antriebsradachse 24 geführt. Zur Vermeidung eines Ölaustritts zwischen dem Lagergehäuse 14 und dem Antriebsrad 12 nach Außen ist ein Lippendichtring 48 in einer Aufnahme 50 zwischen dem Lagergehäuse 14 und dem ersten Ende 47 der Antriebsradachse 24 angeordnet. Das Öl verbleibt somit innerhalb des Gehäuses 14,16.

Da sich das Antriebsrad 12 und somit die Antriebsradachse 24 relativ zur Nockenwelle 10 drehen können soll und dennoch die Schmierölbohrung 44 in die Antriebsradachse 24 fortgesetzt werden soll, umgreift ein ringförmiger, sich axial erstreckender Vorsprung 52 am zweiten Ende 58 der Antriebsradachse 24 das einen Absatz 54 aufweisende Ende der Nockenwelle 10 unter Zwischenlage eines Dichtrings 56.

Auf dem zweiten Ende 58 der Antriebsradachse 24 ist ein Sonnenrad 60 des Planetengetriebes 18 befestigt. Dieses Sonnenrad 60 kämmt mit drei Planetenrädern 62, die auf Achszapfen 64 gelagert sind, deren Enden an einem Planetenträger 66 befestigt sind. Der Planetenträger 66 ist auf dem Ende der Nockenwelle 10 zumindest drehfest befestigt. Um die drei Planetenräder 62 herum ist ein Hohlrad 68 angeordnet, dessen Innenverzahnung 70 mit den Planetenrädern 62 kämmt und welches eine Außenverzahnung 72 aufweist, in welche eine Schnecke 74 greift. Diese Schnecke 74 ist auf einer Antriebswelle 76 angeordnet, die über den Elektromotor 22 betätigt werden kann.

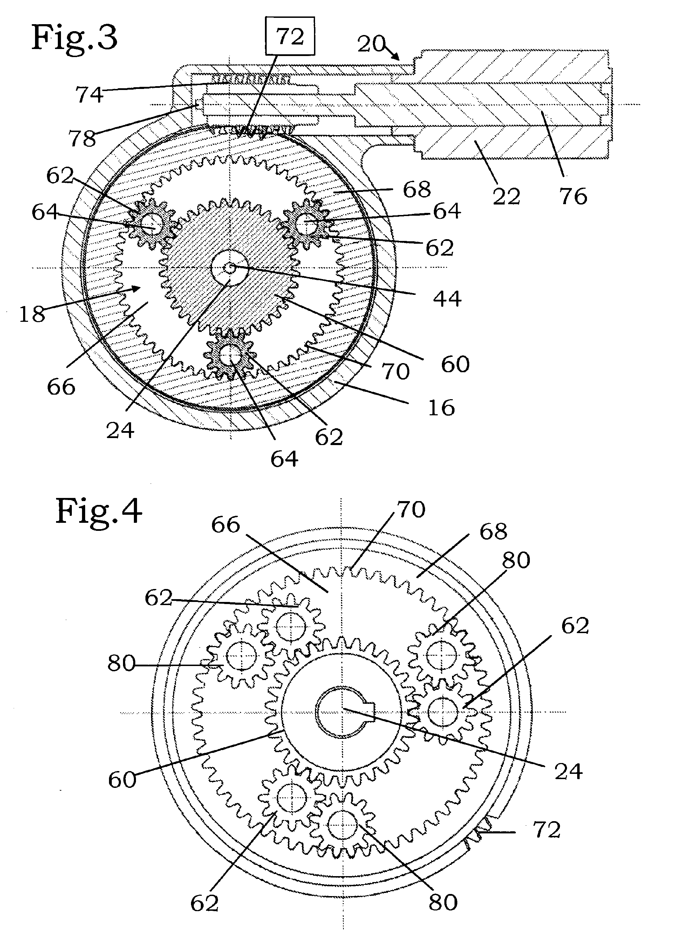

Der Elektromotor 22 mit der Schnecke 74 und der Antriebswelle 76 bilden gemeinsam den Stellantrieb 20. Dieser wird mit Ausnahme des Elektromotors 22 vom Getriebegehäuse 16 umgeben, was insbesondere aus Figur 3 ersichtlich ist. Der Stellantrieb 20 ist somit vollständig in das Gehäuse 16 des Planetengetriebes 18 integriert und somit vor Umwelteinflüssen im Motorraum geschützt. Am Ende der Antriebswelle 76 ist ein Magnet 78 befestigt, der mit einem nicht dargestellten, berührungslosen Sensor, beispielsweise einem Hall-Sensor, zur Lagerückmeldung korrespondiert.

Das Planetengetriebe 18 gemäß der Figur 4 unterscheidet sich von dem vorgeschriebenen Planetengetriebe dadurch, dass zusätzlich zu den Planetenrädern 62 mit diesen kämmende Mondräder 80 im Planetengetriebe angeordnet sind. Während die Planetenräder 62 mit dem Sonnenrad 60 kämmen, greifen die Zähne der Mondräder 80 in die Innenverzahnung des Hohlrades 68 ein. Hierdurch kann die Übersetzung, welche im Ausführungsbeispiel gemäß der Figuren 1 bis 3 2,66:1 beträgt auf 1: -1 oder 2:-1 geändert werden, wodurch Antriebsräder 12 bekannter Nockenwellenantriebe verwendet werden können.

Im Folgenden wird die Funktionsweise der Vorrichtung zur Phasenverschiebung anhand der Figuren 1 bis 3 näher erläutert.

Im Normalbetrieb wird die Drehbewegung des Antriebsrades 12 über das Sonnenrad 60 auf die Planetenräder 62 übertragen. Gleichzeitig wird das Hohlrad 68 durch die Selbsthemmung der Schnecke 74 in seiner Stellung festgehalten. Durch das Abrollen der Planetenräder 62 auf der feststehenden Innenverzahnung 70 des Hohlrades 68 wird die Bewegung der Planetenräder 62 über den Planetenträger 66 auf die Abtriebswelle 10 übertragen.

Soll nun der Drehwinkel zwischen dem Antriebsrad 12 und der Abtriebswelle 10 um eine bestimmte Phase verschoben werden, wird die Antriebswelle 76 und damit die Schnecke 74 über den Elektromotor 22 in Bewegung versetzt. Hierdurch wird das Hohlrad 68 und mit dem Hohlrad 68 die Planetenräder 62 sowie der Planetenträger 66 und die Abtriebswelle 10 um einen bestimmten Winkel gedreht, wodurch eine Verdrehung der Nockenwelle 10 relativ zum Antriebsrad 12 erfolgt.

Somit wird es auf einfache Art und Weise möglich, beispielsweise die Öffnungscharakteristik von Ein- oder Auslassventilen eines Verbrennungsmotors zeitlich im Verhältnis zum Kolbenhub zu verstellen.

Es wird deutlich, dass die gesamte Vorrichtung in den Zylinderkopf eines Verbrennungsmotors integriert werden kann, wodurch sich die Vorrichtung im Ölkreislauf der Verbrennungskraftmaschine befindet somit auch nach außen gekapselt ist. Der für eine derartige Vorrichtung benötigte Bauraum ist insbesondere bezüglich der axialen Ausdehnung zur Nockenwelle extrem gering. Insbesondere in axialer Richtung zur Nockenwelle ist jedoch üblicherweise kein Bauraum in modernen Verbrennungsmotoren vorhanden. Zusätzlich kann der Bauraum auch durch eine geeignete Untersetzung weiter verkleinert werden, da sich hierdurch kleinere Antriebsraddurchmesser realisieren lassen. Eine Einschränkung bezüglich des Verstellwinkels besteht ebenfalls nicht.

Es sollte deutlich sein, dass die erfindungsgemäße Vorrichtung hinsichtlich ihrer konstruktiven Ausgestaltung, beispielsweise der Anzahl der verwendeten Planetenräder, geändert werden kann, ohne den Schutzbereich der Ansprüche zu verlassen.

## Patentansprüche

1. Vorrichtung zur Phasenverschiebung des Drehwinkels eines Antriebsrades zu einer Abtriebswelle, insbesondere einer Nockenwelle einer Verbrennungskraftmaschine mit
genau einem Planetengetriebe (18), welches ein Sonnenrad (60) und ein Hohlrad (68) aufweist, welche mit zumindest einem Planetenrad (62) kämmen sowie einem Planetenträger (66), auf dem das zumindest eine Planetenrad (62) drehbar angeordnet ist und der zumindest drehfest mit der Abtriebswelle (10) verbunden ist,
einem Antriebsrad (12), welches mit dem Planetengetriebe (18) verbunden ist und
einem Stellantrieb (20), der derart am Planetengetriebe (18) angreift, dass das Hohlrad (68) relativ zum Sonnenrad (60) verdrehbar ist,
**dadurch gekennzeichnet, dass**
der Stellantrieb (20) tangential zum Planetengetriebe (18) angeordnet ist und eine Schnecke (74) aufweist, die an einer Außenverzahnung (72) des Hohlrades (68) angreift, wobei das Sonnenrad (60) zumindest indirekt mit dem Antriebsrad (12) verbunden ist.

2. Vorrichtung zur Phasenverschiebung des Drehwinkels eines Antriebsrades zu einer Abtriebswelle, insbesondere einer Nockenwelle einer Verbrennungskraftmaschine nach Anspruch 1,
**dadurch gekennzeichnet, dass**
das Antriebsrad (12) über eine Antriebsradachse (24) in einem Lagergehäuse (14) gelagert ist, wobei die Antriebsradachse (24) eine Schmierölbohrung (44) aufweist, die mit einer Schmierölbohrung (44) der Abtriebswelle (10) fluidisch verbunden ist.

3. Vorrichtung zur Phasenverschiebung des Drehwinkels eines Antriebsrades zu einer Abtriebswelle, insbesondere einer Nockenwelle einer Verbrennungskraftmaschine nach Anspruch 2,
**dadurch gekennzeichnet, dass**
das Lagergehäuse (14) mit einem Getriebegehäuse (16) fest verbunden ist, wobei das Planetengetriebe (18) und zumindest die Schnecke (74) des Stellantriebs (20) in dem Lagergehäuse (14) und dem Getriebegehäuse (16) angeordnet sind.

4. Vorrichtung zur Phasenverschiebung des Drehwinkels eines Antriebsrades zu einer Abtriebswelle, insbesondere einer Nockenwelle einer Verbrennungskraftmaschine nach einem der vorhergehenden Ansprüche,
**dadurch gekennzeichnet, dass**
das Planetengetriebe (18), die Schnecke (74) des Stellantriebs (20) und die Lagereinheit (26) des Antriebsrades (12) im Zylinderkopf der Verbrennungskraftmaschine integriert sind.

5. Vorrichtung zur Phasenverschiebung des Drehwinkels eines Antriebsrades zu einer Abtriebswelle, insbesondere einer Nockenwelle einer Verbrennungskraftmaschine nach einem der vorhergehenden Ansprüche,
**dadurch gekennzeichnet, dass**
zwischen Hohlrad (68) und Planetenrad (62) zur Drehübertragung ein Mondrad (80) angeordnet ist, welches in die Innenverzahnung (70) des Hohlrades (68) greift.

6. Vorrichtung zur Phasenverschiebung des Drehwinkels eines Antriebsrades zu einer Abtriebswelle, insbesondere einer Nockenwelle einer Verbrennungskraftmaschine nach einem der vorhergehenden Ansprüche,
**dadurch gekennzeichnet, dass**
am Stellantrieb (20) ein Magnet (78), der mit einem berührungslosen Sensor kommuniziert, angeordnet ist.

## Claims

1. A device for phase-shifting the rotational angle of a drive wheel relative to an output shaft, particularly a camshaft of an internal combustion engine, said device comprising
a planetary gear (18) including a sun wheel (60) and a hollow wheel (68), said wheels meshing with at least one planet wheel (62), said device further comprising a planet wheel carrier (66) having said at least one planet wheel (62) arranged thereon and being connected at least to the output shaft (10) for common rotation therewith,
a drive wheel (12) connected to the planetary gear (18), and an actuator (20) engaging the planetary gear (18) in such a manner that the hollow wheel (68) is rotatable relative to the sun wheel (60),
wherein
the actuator (20) is arranged tangentially to the planetary gear (18) and comprises a worm (74) engaging an outer toothing (72) of the hollow wheel (68), and the sun wheel (60) is at least indirectly connected to the drive wheel (12).

2. A device for phase-shifting the rotational angle of a drive wheel relative to an output shaft, particularly a camshaft of an internal combustion engine, as provided according to claim 1,
wherein the drive wheel (12) is supported in a bearing housing (14) via a drive wheel axis (24), said drive wheel axis (24) comprising a lubricating-oil bore (44) in fluid connection with a lubricating-oil bore (44) of the output shaft (10).

3. A device for phase-shifting the rotational angle of a drive wheel relative to an output shaft, particularly a camshaft of an internal combustion engine, as provided according to claim 2,
wherein the bearing housing (14) is fixedly connected to a gear housing (16), and the planetary gear (18) and at least the worm (74) of the actuator (20) are arranged in the bearing housing (14) and the gear housing (16).

4. A device for phase-shifting the rotational angle of a drive wheel relative to an output shaft, particularly a camshaft of an internal combustion engine according to any one of the preceding claims, wherein the planetary gear (18), the worm (74) of the actuator (20) and the bearing unit (26) of the drive wheel (12) are integrated in the cylinder head of the internal combustion engine.

5. A device for phase-shifting the rotational angle of a drive wheel relative to an output shaft, particularly a camshaft of an internal combustion engine according to any one of the preceding claims, wherein a moon wheel (80) is arranged between the hollow wheel (68) and the planet wheel (62) for rotary transmission, said moon wheel (80) engaging the inner toothing (70) of the hollow wheel (68).

6. A device for phase-shifting the rotational angle of a drive wheel relative to an output shaft, particularly a camshaft of an internal combustion engine according to any one of the preceding claims, wherein a magnet (78) is arranged on the actuator (20), said magnet (78) communicating with a contactless sensor.

## Revendications

1. Dispositif de décalage de phase de l'angle de rotation d'une roue motrice par rapport à un arbre entrainée, notamment un arbre à cames d'un moteur à combustion interne, comprenant
exactement un engrenage planétaire (18) comprenant une roue solaire (60) et une couronne (68) qui sont en prise avec au moins un satellite (62), et un porte-stellites (66) sur lequel ledit au moins un satellite (62) est disposé de manière rotative et qui est au moins lié en rotation à l'arbre entrainé (10),
une roue motrice (12) liée audit engrenage planétaire (18), et
un servomoteur (20) en prise avec ledit engrenage planétaire (18) de sorte que ladite couronne (68) peut être tournée par rapport à ladite roue solaire (60),
**caractérisé en ce que**
ledit servomoteur (20) est disposé tangentiellement par rapport à l'engrenage planétaire (18) et comprend une vis sans fin (74) qui est en prise avec la denture externe (72) de la couronne (68), ladite roue solaire (60) étant liée au moins indirectement à ladite roue motrice (12).

2. Dispositif de décalage de phase de l'angle de rotation d'une roue motrice par rapport à un arbre entrainée, notamment un arbre à cames d'un moteur à combustion interne, selon la revendication 1,
**caractérisé en ce que**
ladite roue motrice (12) est supportée dans un logement de palier (14) par un axe (24) de la roue motrice, ledit axe (24) de la roue motrice comprenant un perçage d'huile lubrifiant (44) en communication fluidique avec un perçage d'huile lubrifiant (44) de l'arbre entrainé (10).

3. Dispositif de décalage de phase de l'angle de rotation d'une roue motrice par rapport à un arbre entrainée, notamment un arbre à cames d'un moteur à combustion interne, selon la revendication 2,
**caractérisé en ce que**
ledit logement de palier (14) est rigidement lié à une boite d'engrenage (16), ledit engrenage planétaire (18) et au moins ladite vis sans fin (74) du servomoteur (20) sont disposés dans ledit logement de palier (14) et ladite boite d'engrenage (16).

4. Dispositif de décalage de phase de l'angle de rotation d'une roue motrice par rapport à un arbre entrainée, notamment un arbre à cames d'un moteur à combustion interne, selon l'une des revendications précédentes,
**caractérisé en ce que**
ledit engrenage planétaire (18), ladite vis sans fin (74) du servomoteur (20) et l'ensemble palier (26) de la roue motrice (12) sont intégrés dans la tête du cylindre du moteur à combustion interne.

5. Dispositif de décalage de phase de l'angle de rotation d'une roue motrice par rapport à un arbre entrainée, notamment un arbre à cames d'un moteur à combustion interne, selon l'une des revendications précédentes,
**caractérisé en ce que**
une roue lunaire (80) est disposée entre ladite couronne (68) et ledit satellite (62) pour la transmission de rotation, ladite roue lunaire étant en prise avec la denture interne (70) de la couronne (68).

6. Dispositif de décalage de phase de l'angle de rotation d'une roue motrice par rapport à un arbre entrainée, notamment un arbre à cames d'un moteur à combustion interne, selon l'une des revendications précédentes,
**caractérisé en ce qu'**
un aimant (78), qui est en communication avec un capteur sans contact, est prévu au servomoteur (20).
